(19) Europäisches Patentamt
European Patent Office
Office européen des brevets

(11) **EP 2 678 913 B1**

(12) **EUROPEAN PATENT SPECIFICATION**

(45) Date of publication and mention
of the grant of the patent:
**17.02.2016 Bulletin 2016/07**

(21) Application number: **12715154.6**

(22) Date of filing: **22.02.2012**

(51) Int Cl.:
*H02H 1/00* (2006.01)      *H02H 9/04* (2006.01)

(86) International application number:
**PCT/IB2012/050813**

(87) International publication number:
**WO 2012/114289 (30.08.2012 Gazette 2012/35)**

(54) **DEVICE FOR PROTECTING ELECTRIC EQUIPMENT FROM OVERVOLTAGE AND LIGHTENING**

VORRICHTUNG ZUM SCHUTZ ELEKTRISCHER GERÄTE VOR ÜBERSPANNUNG UND BLITZEN

DISPOSITIF POUR PROTÉGER UN ÉQUIPEMENT ÉLECTRIQUE CONTRE LES SURTENSIONS ET LA FOUDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2011 IT MI20110266**

(43) Date of publication of application:
**01.01.2014 Bulletin 2014/01**

(73) Proprietor: **Costruzioni Elettromeccaniche P. Torresan S.r.l.**
**Sesto San Giovanni (IT)**

(72) Inventor: **BRASOLA, Flavio**
**I-20040 Roncello (IT)**

(74) Representative: **Bernotti, Andrea et al**
**Studio Torta S.p.A.**
**Via Viotti, 9**
**10121 Torino (IT)**

(56) References cited:
**EP-B1- 0 974 181          DE-A1- 3 423 444**
**US-A1- 2005 162 801     US-A1- 2006 262 478**

Printed by Jouve, 75001 PARIS (FR)

**Description**

TECHNICAL FIELD

The present invention relates to a device for protecting electric equipment from lightening.

BACKGROUND ART

The circuits for protecting electric equipment from lightening are generally based on the use of varistors, e.g. of the zinc oxide (ZnO) type. It is known that varistors are devices with strongly non-linear voltage-current characteristic, and generally have a high impendence state and a low impedance state. Under normal working conditions, if the voltage applied to the terminals of a varistor is lower than its breakdown voltage, the device is in high impedance state. When the breakdown voltage is exceeded, e.g. due lightening or overvoltage, the impedance drops and the varistor may draw high currents in the presence of modest voltage variations.

While being relatively effective in increasing the degree of protection of the equipment connected downstream of the varistor, the known devices have major limitations.

Firstly, even in high impendence state, the leakage currents of the varistors are however rather high, in general in the order of several milliamperes. In addition to energy consumption, currents of this magnitude may cause overheating and early aging of the varistors.

In order to reduce leakage currents, the varistors are overdimensioned, or more precisely the varistors are dimensioned so that their breakdown voltage is much higher than the rated working voltage of the protected equipment. However, this choice inevitably implies a lower protection effectiveness. In particular, the equipment may be exposed to voltages higher than the rated voltage, without the protection device intervening.

DE 34 23 4445 A1 discloses a protection device comprising signaling element which is selectively activate by a bridge circuit to indicate a condition of malfunctioning. A first varistor and a second varistor form a first branch and a second branch of the bridge circuit, respectively, whereas other branches of the bridge circuit include respective reference resistors. The signaling element is activated by the bridge circuit when impedance values of the first and second varistor are not balanced.

Other examples of protection circuits are disclosed in US 2005/162801 A1 and in US 2006/262478 A1.

DISCLOSURE OF INVENTION

It is an object of the present invention to provide an electric equipment protection device which allows to overcome the described limitations.

According to the present invention, an electric equipment protection device is provided as defined in claim 1.

BRIEF DESCRIPTION OF THE DRAWINGS

Further features and advantages of the present invention will be apparent from the following description of a non-limitative embodiment thereof, with reference to the figures of the accompanying drawings, in which:

- figure 1 is a simplified wiring diagram of an electric equipment protection device in accordance with a first embodiment of the present invention;
- figure 2 is a chart showing magnitudes related to the protection device in figure 1;
- figure 3 is a simplified wiring diagram of an electric equipment protection device in accordance with a second embodiment of the present invention;
- figure 4 is a simplified wiring diagram of an electric equipment protection device in accordance with a third embodiment of the present invention;
- figure 5 is a simplified wiring diagram of an electric equipment protection device in accordance with a fourth embodiment of the present invention;
- figure 6 is a simplified wiring diagram of an electric equipment protection device in accordance with a fifth embodiment of the present invention;
- figure 7 is a simplified wiring diagram of an electric equipment protection device in accordance with a sixth embodiment of the present invention;
- figure 8 is a simplified wiring diagram of an electric equipment protection device in accordance with a seventh embodiment of the present invention; and
- figure 9 is a simplified wiring diagram of an electric equipment protection device in accordance with an eighth embodiment of the present invention.

BEST MODE FOR CARRYING OUT THE INVENTION

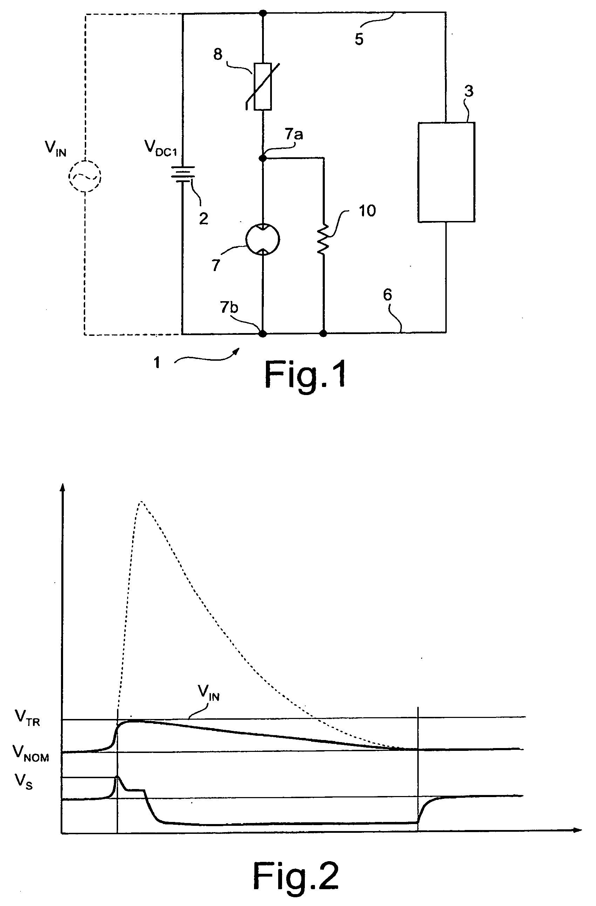

With reference to figure 1, reference numeral 1 indicates as a whole a protection device, which is arranged between a power source 2 and an electric equipment 3. In the example described, the electric equipment 3 requires a direct supply, which is provided by the power source 2.

The protection device 1 comprises a first power line 5, a second power line 6, a gas discharge device 7, a varistor 8 and an activation resistor 10.

The first power line 5 (positive polarity) and the second power line 6 (negative polarity) are connected to the power source 2 for receiving and transferring the power voltage $V_{DC}$ to the electric equipment 3.

The gas discharge device 7 has a first terminal 7a connected to a terminal of the varistor 8 and a second terminal 7b connected to the second power line 6. The gas discharge device 7 has a high impedance state and a low impedance state. The transition from the high impendence state (which is the normal state of the gas discharge device 7) occurs when the voltage between the first terminal 7a and the second terminal 7b exceeds a threshold voltage $V_S$. The gas discharge device 7 then remains in the low impendence state until the voltage between the first terminal 7a and the second terminal 7b is cancelled or until the current drops under a maintenance value.

Varistor 8 is of the zinc oxide type, and is connected between the first power line 5 and the first terminal 7a of the gas discharge device 8. Thus, the gas discharge device gas 7 is coupled to the first power line 5 via varistor 8. Varistor 8 has a breakdown voltage $V_{BD}$ lower than the rated value $V_{NOM}$ of the power voltage $V_{DC}$. However, gas discharge device 7 and varistor 8 are chosen so that the sum of the threshold voltage $V_S$ of the gas discharge device 7 and of the breakdown voltage $V_{BD}$ of varistor 8 is higher than the rated value $V_{NOM}$ of the power voltage $V_{DC}$.

The activation resistor 10 defines a network to activate the lightening protection and is connected between the first terminal 7a and the second terminal 7b of the gas discharge device 7.

The critical overvoltage value which determines the intervention of the protection may be programmed by means of the activation network, which in the described example is the activation resistor 10. In practice, the activation resistor 10 allows the protection to accurately intervene when the input voltage $V_{IN}$ between the first power line 5 and the second power line 6 exceeds a trigger voltage $V_{TR}$. This condition occurs when an overvoltage (which is depicted by a variable voltage generator shown in a dashed line in figure 1), due to atmospheric lightening or interference, is superimposed to the power voltage $V_{DC}$. The resistance value R of the activation resistor may be selected so that the condition of exceeding the trigger voltage $V_{TR}$ corresponds to the exceeding of the voltage threshold $V_S$ of the gas discharge device 7.

In particular, the following relation should be satisfied:

$$V_{TR} = V_R(I_{TR}) + V_S = V_R(I_{TR}) + RI_{TR} = V_R(I_{TR}) + RkV_R^{\alpha}(I_{TR}) \qquad (1)$$

where $V_R(I_{TR})$ is the voltage drop on varistor 8 when a trigger current $I_{TR}$ flows and causes the gas discharge device 7 to pass from the high impedance state to the low impedance state (i.e. in the presence of the trigger voltage $V_{TR}$ between the first power line 5 and the second power line 6). Furthermore, k and $\alpha$ are experimental coefficients which define the current-voltage characteristic of varistor 8. In general, the following is obtained by indicating with $I_R$ the current through the varistor:

$$I_R = kV_R^{\alpha}(I_R) \qquad (2)$$

The following is obtained from relation (1):

$$R = \frac{V_{TR} - V_R(I_{TR})}{kV_R^{\alpha}(I_{TR})} \qquad (3)$$

Although equation (3) cannot be solved analytically due to the non-linearity of the current-voltage characteristic of varistor 8, determining numeric solutions is however convenient. The current-voltage characteristic of varistor 8 is in fact univocally determined once all parameters k and $\alpha$, which are generally provided by the manufacturer or may be measured experimentally, are known.

In use, the gas discharge device 7 is normally in high impedance condition (and therefore it is practically in the off-state) and the voltage on varistor 8 is lower than the breakdown voltage $V_{BD}$. When an overvoltage occurs, e.g. caused by lightening, the voltage on the activation resistor 10 increases up to reach a threshold voltage $V_S$, which corresponds to the trigger voltage $V_{TR}$ between the first power line 5 and the second power line 6. The gas discharge device 7 thus switches to low impedance state. The voltage between the first terminal 7a and the second terminal 7b is abated. The gas discharge device 7 is capable of drawing currents even in the order of several thousands of amperes without substantial voltage variations. Switching the gas discharge device 7 also causes the breakdown voltage $V_{BD}$ of varistor 8 to be exceeded. Thereby, the overcurrent is drawn by the protection device 1 without consequences for the electric equipment 3 connected downstream. The breakdown threshold of the protection device 1 is accurately fixed at the trigger voltage $V_{TR}$ by the activation network, which in the described embodiment is defined by the activation resistor 10 only.

The described protection device 1 has major advantages. Firstly, an optimal trade-off may be achieved, which effectively preserves both the safety of devices downstream of the protection device and the working life of the varistor. The passage of current under normal operating conditions is reduced to a few microamperes by virtue of the presence of the gas discharge device 7 and of the activation resistor 10. In addition to the energy consumption reduction, this would avoid the overheating of varistor 8, which would cause its early deterioration. The varistors are in fact made with zinc oxide granules embedded in resin. The overheating due to currents in the order of milliamperes causes, over time, a failure of the resin, which determines, in turn, an increase of the leakage current and the consequent temperature increase, thus compromising the operation of the varistor until failure due to thermal leakage is caused. Lower leakage currents thus imply a longer working life. Therefore, the varistors can be dimensioned with breakdown voltages lower than the rated value of the power voltage, thus exploiting the combination with the gas discharge device and the activation network. In particular, the activation network allows to accurately calibrate the trigger voltage where protection intervenes. In conventional devices, instead, the breakdown voltage of the varistors is normally overdimensioned, because leakages are so reduced. In this way, however, the protection intervenes at higher voltage levels, which may damage the downstream equipment or cause the early aging thereof.

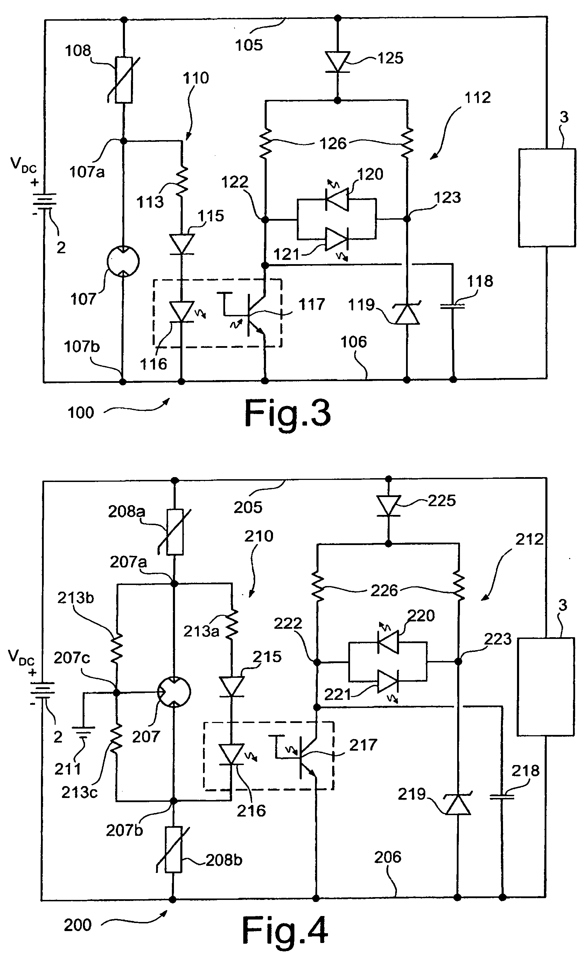

In the embodiment shown in figure 3, a protection device 100 is connected between the power source 2 and the electric equipment 3, and comprises a first power line 105, a second power line 106, a gas discharge device 107, a varistor 108, an activation network 110 and a diagnostic device 112. The activation network 110 and the diagnostic device 112 further define a control stage of varistor 108. As in the previous case, the gas discharge device 107 has a first terminal 107a connected to a terminal of varistor 108, and a second terminal 107b connected to the second power line 106; and the varistor 108 is connected between the first power line 105 and the first terminal 107a of the gas discharge device 107.

The activation network 110 comprises an activation resistor 113 and a directional diode 115 series-connected between the first terminal 107a and the second terminal 107b of the gas discharge device 107.

An emitter diode or emitter diode 116, which forms part of the diagnostic device 112, is series-connected to the directional diode 115.

In addition to the emitter diode 116, the diagnostic device 112 comprises a photodetector device, which in the described embodiment is a phototransistor 117; a driving network, which includes a capacitor 118, a zener diode 119, a diode 125 and resistors 126; a first signaling LED 120 and a second signaling LED 121.

The phototransistor 117, here of the NPN type, has a collector terminal connected to a first driving node 122 and an emitter terminal connected to the second power line 106 and is optically coupled to the emitter diode 116.

Capacitor 118 is connected between the first driving node 122 and the second power line 106.

The zener diode 119 has cathode terminal connected to a second driving node 123 and anode terminal connected to the second power line 106.

The first signaling LED 120 and the second signaling LED 121 are anti-parallel connected between the first driving node 122 and the second driving node 123.

The diode 125 and the two resistors 126 connect the first driving node 122 and the second driving node 123 to the first power line 105. More precisely, the diode has anode terminal connected to the first power line 105 and cathode terminal connected to a common terminal of the two resistors 126, which have further terminals connected to the first driving node 122 and to the second driving node 123, respectively.

In this case, the activation network 110 is configured to cause the gas discharge device 107 to switch on symmetrically. In the presence of positive interference, indeed, the activation of the gas discharge device 107 is essentially determined by the activation resistor 113, as already explained with reference to figure 1. If instead, an overvoltage with a polarity opposite to the input voltage $V_{IN}$ occurs, the directional diode 115 prevents the current from passing through the activation resistor 113 and the gas discharge device 107 switches on when the voltage on the gas discharge device 107 reaches the trigger voltage Vs. The protection is thus activated by the trigger voltage $V_S$ of the gas discharge device 107 (which is lower than the trigger voltage $V_{TR}$), because loads supplied with direct current often poorly tolerate even short lasting, transient reverse voltages.

The diagnostic device 112 provides an immediate reading of the actual state of varistor 108 signaling when a degradation threshold which requires replacement is reached. As mentioned, the phototransistor 117 is optically coupled to the emitter diode 116 and thus conducts a current $I_T$ which is substantially proportional to the intensity of the light emitted by the light emitter diode 116, which in turn is correlated with the impedance of varistor 108. More precisely, the variations of the current flowing to the emitter diode 116 are substantially due to impedance variations of varistor 108, which is the component most subject to degradation. Emitter diode 116 and phototransistor 117 thus form an impedance detection circuit which provides a signal (i.e. the current $I_T$ through phototransistor 117) indicative of the impedance the of the varistor 108.

When the varistor 108 is under regular operating conditions, the emitter diode 116 is sufficiently polarized to maintain the current $I_T$ through the phototransistor 117, which remains in on-state with a low voltage drop between the collector and emitter terminals. The zener diode 119 is thus in off-state. Under these conditions, the first signaling diode 120 is in on-state, while the second signaling diode 121 is in off-state.

When the varistor 108 degrades, its impedance increases, thus reducing the current flowing through the emitter diode 116. The radiation provided by the emitter diode 116 is no longer sufficient to maintain the phototransistor 117 on, which is set to the off-state and allows the capacitor 118 to be charged up to the reverse breakdown voltage of the zener diode 119. Under these conditions, the first signaling diode 120 is in the off-state, while the second signaling diode 121 is in the on-state. Thus, in practice, the first signaling diode 120 indicates the correct operation of the protection device 1, while the second signaling diode 121 signals degradation conditions of the varistor 108.

According to the embodiment shown in figure 4, a protection device 200 is connected between the power source 2 and the electric equipment 3, and comprises a first power line 205, a second power line 206, a gas discharge device 207, a first varistor 208a, a second varistor 208b, an activation network 210 and a diagnostic device 212.

The gas discharge device 207 has a first terminal 207a connected to the first power line 205 through the first varistor 208a, a second terminal 207b connected to the second power line 206 through the second varistor 208b, and a third terminal 207c connected to a ground line 211.

The activation network 210 comprises an activation resistor 213a, a second activation resistor 213b, a third activation resistor 213c and a directional diode 215, series-connected to the first activation resistor 213a.

The first activation resistor 213a, with the directional diode 215 in series, is connected between the first terminal 207a and the second terminal 207b of the gas discharge device 207; the second activation resistor 213b is connected between the first terminal 207a and the third terminal 207c; and the third activation resistor 213c is connected between the second terminal 207b and the third terminal 207c.

The diagnostic device 212 comprises: an emitter diode 216 (series-connected to the directional diode 215); a phototransistor 217 coupled to the emitter diode 216; a driving network, including a capacitor 218, a zener diode 219, a diode 225 and two resistors 226; a first signaling LED 220 and a second signaling LED 221, anti-parallel connected between a first driving node 222 and a second driving node 223. The configuration and operation of the diagnostic device 212 of the embodiment of figure 4 are entirely similar to the configuration and operation of the diagnostic device 112 already described with reference to figure 3 and for this reason they will not be described in further detail.

The activation network 210 provides a balanced protection with respect to the ground line 211, by virtue of the connection of the third terminal 207c of the gas discharge device 207 and to the presence of the second resistor 213b and of the third resistor 213c. In particular, in the presence of common overvoltages with respect to the ground line 211, the activation network 210 allows however to have the gas discharge device 207 switch to the low impedance state in a timely manner. Furthermore, the maximum voltage is limited with respect to the ground line 211, thus increasing safety. The embodiment in figure 4 is particularly adapted to be used when the power source 2 is of the photovoltaic type.

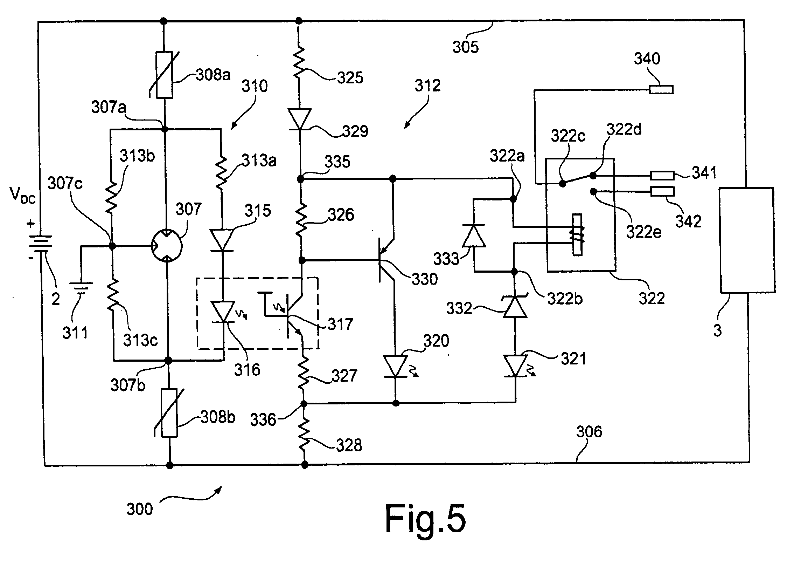

With reference to figure 5, a protection device 300 is connected between the power source 2 and the electric equipment 3, and comprises a first power line 305, a second power line 306, a gas discharge device 307, a first varistor 308a, a second varistor 308b, an activation network 310 and a diagnostic device 312.

The gas discharge device 307 has a first terminal 307a connected to the first power line 305 through the first varistor 308a, a second terminal 307b connected to the second power line 306 through the second varistor 308b and a third terminal 307c connected to a ground line 311.

The activation network 310 comprises a first activation resistor 313a, a second activation resistor 313b, a third activation resistor 313c and a directional diode 315, series-connected to the first activation resistor 313a.

The first activation resistor 313a, with the directional diode 315 in series, is connected between the first terminal 307a and the second terminal 307b of the gas discharge device 307; the second activation resistor 313b is connected between the first terminal 307a and the third terminal 307c; and the third activation resistor 313c between the second terminal 307b and the third terminal 307c.

The diagnostic device 312 comprises an emitter diode 316, series-connected to the activation resistor 313a and to the directional diode 315, a phototransistor 317 optically coupled to the emitter diode 316, a driving network 312, a first signaling LED 320, a second signaling LED 321 and a relay 322, which in the example shown is of the SPDT type.

The driving network 312 comprises four driving resistors 325-328, a directional diode 329, a driving transistor 330, a zener diode 332 and a protection diode 333.

The driving resistor 325 is connected between the first power line 305 and an anode terminal of the directional diode 329, a cathode terminal of which is connected to a first driving node 335. The driving resistor 326 is connected between the first driving node 335 and a collector terminal of the phototransistor 317. The driving resistor 327 is connected between an emitter terminal of the phototransistor 317 and a second driving node 336. The driving resistor 328 is connected between the second driving node 336 and the second power line 306.

The driving transistor 330, of PNP type, has emitter terminal connected to the first control node 335, collector terminal connected, via the first signaling LED 320, to the second control node 336 and base terminal connected to the collector terminal of the phototransistor 317. The driving resistor 326 is thus connected between the emitter and base terminals of the driving transistor 330.

The protection diode 333 has cathode terminal connected to the first driving node 335 and anode terminal connected to the cathode terminal of the zener diode 332. Furthermore, the protection diode 333 is connected between control terminals 322a, 322b of relay 322.

The zener diode 332 has anode terminal connected to the anode terminal of the second signaling LED 321, a cathode terminal of which is connected to the second driving node 336.

The relay 322 has conducting terminals 322c, 322d, 322e connected to respective contacts 340, 341, 342 for the remote connection to a signaling device (not shown here). The relay 322 has a first state, in the absence of excitation current between the control terminals 322a, 322b, in which the conducting terminal 322c is connected to the conducting terminal 322d; and a second state, when an excitation current is present between the control terminals 322a, 322b, in which the conducting terminal 322c is connected to the conducting terminal 322e.

When the first varistor 307a and the second varistor 308b are under normal operating conditions, the current flowing through the emitter diode 316 is sufficient to maintain the phototransistor 317 on, which in turn sets the driving transistor 330 to the on-state. Therefore, under these conditions, the first signaling LED 320 is on, while the second signaling LED 321 is off. Furthermore, no current is supplied to the control terminals 322a, 322b of relay 322. The relay 322 is thus in the first state. When at least one of the first varistor 307a and the second varistor 308b is subject to degradation, the current through the emitter diode 316 decreases and turns off the phototransistor 317, and therefore the driving transistor 330 and the first signaling LED 320. The voltage between the first driving node 335 and the second driving node 336 increases until the reverse breakdown current of the zener diode 332, which is set to the on-state, is exceeded. At this point, the second signaling LED 321 is on and a current is supplied to the control terminals 322a, 322b of the relay 322, which switches thus allowing the malfunction to be remotely signalled.

In an alternative embodiment (not shown), the first and second signaling LEDs are connected to respective conducting terminals of the relay, while the remaining conducting terminal is connected to the first power line. The relay is controlled according to the current which flows through the emitter diode so as to selectively activate one of the first and second signaling LEDs according to the impendence of one or more varistors.

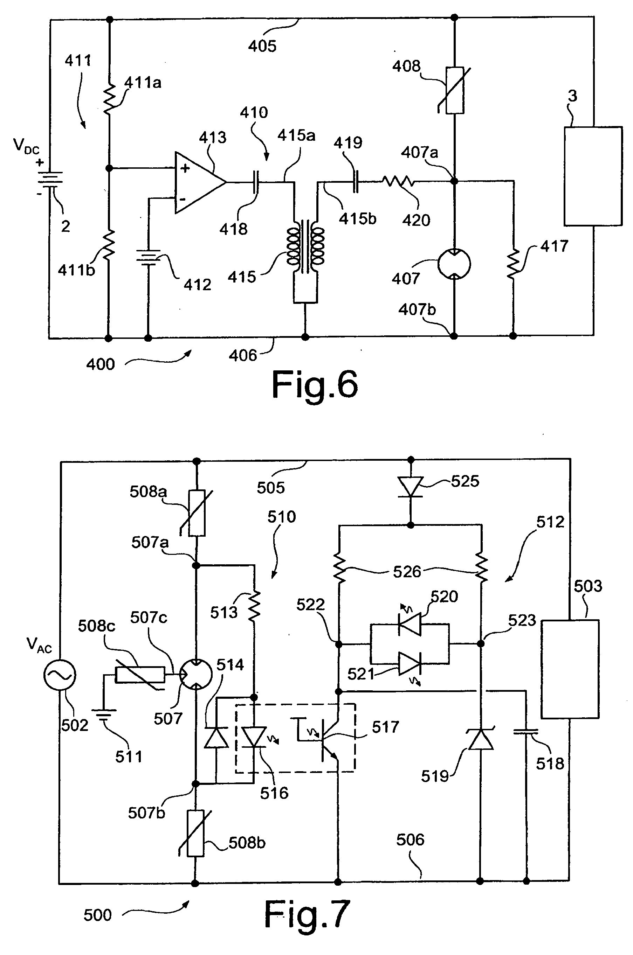

Figure 6 shows an embodiment according to which a protection device 400 is connected between the power source 2 and the electric equipment 3, and comprises a first power line 405, a second power line 406, a gas discharge device 407, a varistor 408 and an activation network 410.

The gas discharge device 407 has a first terminal 407a connected to a terminal of the varistor 408 and a second terminal 407b connected to the second power line 406.

The varistor 408 is connected between the first power line 405 and the first terminal 407a of the gas discharge device 407. Therefore, the gas discharge device 407 is coupled to the first power line 405 via the varistor 408.

The activation network 410 comprises a resistive divider 411, a reference voltage source 412, a comparator 413, a booster transformer 415 and an activation resistor 417.

The resistive divider 411 is connected between the first power line 405 and the second power line 406, and comprises two resistors 411a, 411b.

The comparator 413 has a first (non-inverting) input connected to a common terminal of the resistors 411a, 411b and a second (inverting) input connected to the reference voltage source 412, which may be a reverse-biased zener diode, for example.

The output of comparator 413 is connected to a terminal 415a of the booster transformer 415 via a filter capacitor 418. A boosted terminal 415b of the booster transformer 415 is connected to the first terminal of the gas discharge device 407 via a filter capacitor 419 and a resistor 420.

The activation resistor 417 is connected between the first terminal 407a and the second terminal 407b of the gas discharge device 407.

When the input voltage exceeds the trigger voltage (determined by the reference voltage source 412), the comparator 413 drives the booster transformer 415 so as to take the voltage between the first terminal 407a and the second terminal 407b of the gas discharge device 407 to a level which is higher than the threshold voltage, thus switching the gas discharge device 407 itself.

By virtue of the use of comparator 413 and booster 415, the triggering of the gas discharge device 407 occurs however in a rapid and accurate manner when the trigger voltage is reached. Furthermore, the activation resistor 417 may be dimensioned to further reduce the leakage currents during normal operation, without affecting the effectiveness of the protection.

According to a further embodiment of the invention, shown in figure 7, a protection device 500 is connected between a power source 502, providing an alternating mono-phase power voltage $V_{AC}$ and an electric equipment 503. The protection device 500 comprises a first power line 505, a second power line 506, a gas discharge device 507, a first varistor 508a, a second varistor 508b, a third varistor 508c, an activation network 510 and a diagnostic device 512.

The gas discharge device 507 has a first terminal 507a connected to the first power line 505 via the first varistor 508a, a second terminal 507b connected to the second power line 506 via the second varistor 508b, and a third terminal 507c connected to a ground line 511 via a third varistor 508c.

The activation network 510 comprises an activation resistor 513, connected between the first terminal 507a and the second terminal 507b of the gas discharge device 507, and a diode 514.

The diagnostic device 512 is similar to the diagnostic devices 112 in figure 3 and 212 in figure 4, and comprises: an emitter diode 516; a phototransistor 517 coupled to the emitter diode 516; a driving network, which includes a capacitor 518, a zener diode 519, a diode 525 and two resistors 526; a first signaling LED 520 and a second signaling LED 521, anti-parallel connected between a first driving node 522 and a second driving node 523.

As in the previously described embodiments, the emitter diode 516 is connected between the activation resistor 513 and the second terminal 507b of the gas discharge device 507. Furthermore, in this case, the diode 514 is anti-parallel connected to the diagnostic LED 516, so as to allow the gas discharge device 507 to be symmetrically activated for lightening shocks of opposite polarity.

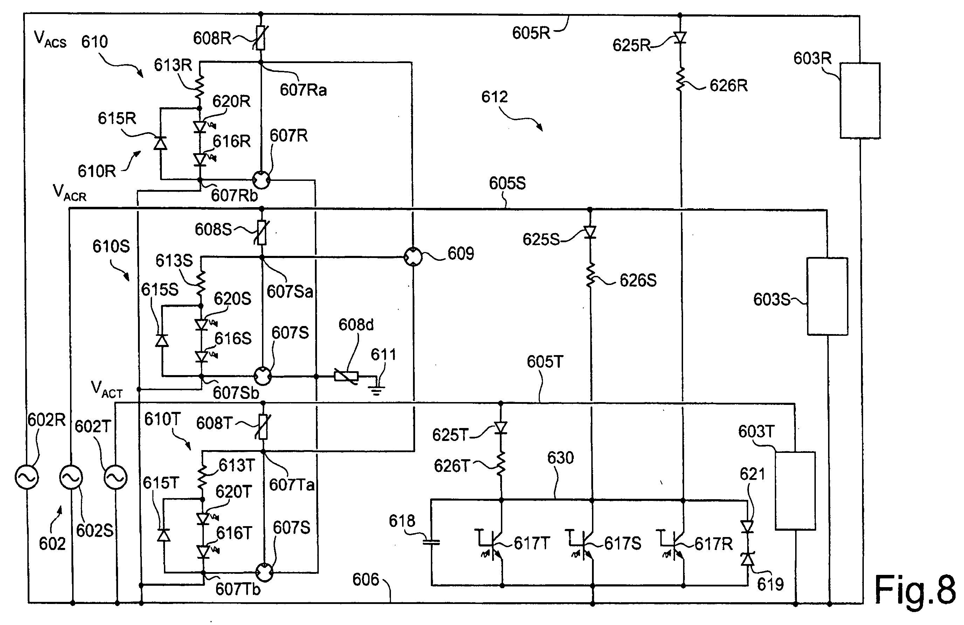

Figure 8 shows a protection device 600 in accordance with a further embodiment of the invention and useable for three-phase systems with neutral line and protective ground.

The protection device 600 is arranged between a power source 602, supplying a three-phase star-connected power voltage $V_{ACS}$, $V_{ACR}$, $V_{ACT}$ (the three phases are indicated with references 602R, 602S, 602T), and a three-phase electric equipment 603R, 603S, 603T and comprises: a first power line 605R, a second power line 605S, a third power line 605T and a neutral line 606; a first gas discharge device 607R, a second gas discharge device 607S, a third gas discharge device 607T and an auxiliary gas discharge device 609; a first varistor 608R, a second varistor 608S, a third varistor 608T and a fourth varistor 608d; an activation network 610 and a diagnostic device 612.

The first gas discharge device 607R has a first terminal 607Ra connected to the first power line 605R via the first varistor 608R and a second terminal 607Rb connected to the neutral line 606.

Similarly, the second gas discharge device 607S has a first terminal 607Sa connected to the second power line 605S via the second varistor 608S and a second terminal 607Sb connected to the neutral line 606; and the third gas discharge device 607T has a first terminal 607Ta connected to the third power line 605T via the third varistor 608T and a second terminal 607Tb connected to the neutral line 606.

Furthermore, the first terminals 607Ra, 607Sa, 607Ta of the first gas discharge device 607R, of the second gas discharge device 607S and of the third gas discharge device 607T are connected to respective terminals of the auxiliary gas discharge device 609; and third terminals of the first gas discharge device 607R, of the second gas discharge device 607S and of the third gas discharge device 607T are connected to a ground line 611 via the varistor 608d.

The activation network 610 comprises three identical branches 610R, 610S, 610T. Similarly, the diagnostic device 612 also has three identical branches 612R, 612S, 612T, and further comprises a capacitor 618, a zener diode 619 and a signaling LED 621.

For simplicity, only branch 610R of the activation network 610 and branch 612R of the diagnostic device 612 will be described hereinafter. It is understood that branches 610S and 610T of the activation network 610 and branches 612S and 612T have the same structure, except naturally for the fact that the branches 610S and 610T are coupled to the second gas discharge device 607S and to the third gas discharge device 607T, respectively.

The branch 610R of the activation network 610 comprises an activation resistor 613R and a directional diode 615R. The activation resistor 613R is connected between the first terminal 607Ra and the second terminal 607Rb of the first gas discharge device 607R via an emitter diode 616R and a signaling LED 620R in series, which belong to the branch 612R of the diagnostic device 612. The directional diode 615R has the anode terminal connected to the second terminal 607Rb of the first gas discharge device 607R and the cathode terminal connected to the activation resistor 613R.

In addition to the emitter diode 616R and to the signaling LED 620R, the branch 612R of the diagnostic device 612 comprises a phototransistor 617R, a diode 625R and a resistor 626R.

The phototransistor 617R is optically coupled to the emitter diode 616R and has emitter and collector terminals connected to the neutral line 606 and to a driving node 630 in common to the three branches 612R, 612S, 612T of the diagnostic device 612, respectively (in practice, the branches 612S, 612T comprise respective phototransistors 617S, 617T having collector terminals connected to the driving node 630).

Diode 625R and resistor 626R are series-connected between the first power line 605R and the driving node 630.

The capacitor 618 is connected between the driving node 630 and the neutral line 606 and, with the zener diode 619, the diode 625R and the resistor 626R, forms a driving network portion for the signaling LED 621 (the driving network further comprises diodes 625S, 625T and resistors 626S, 616T on the remaining phases).

The signaling LED 621 has anode terminal connected to the driving node 630 and cathode terminal connected to a cathode terminal of the zener diode 619, an anode terminal of which is connected to the neutral line 606.

The protection device acts independently on each phase. The gas discharge devices 607R, 607S, 607T switch to the low impedance state when between the respective power lines 605R, 605S, 605T and the neutral line 606 or the ground line 611 there is a voltage higher than the trigger voltage. The configuration with the auxiliary gas discharge device 609 allows the protection device 600 to work on the line-line protection as if a single gas discharge device with four terminals were used (such devices are not available today).

The diagnostic device 612 works as follows. Under normal operative conditions, the currents flowing through the emitter diodes 616R, 616S, 616T in the respective positive half-waves are sufficient to maintain the corresponding phototransistors 617R, 617S, 617T on, which keep the signaling LED 621 in the off-state, each for a respective portion of the period of the power source 602 (it is worth noting that the phototransistors 617R, 617S, 617T are in any case in the off-state during the negative half-waves of the corresponding phases 602R, 602S, 602T, regardless of the conditions of the varistors 608R, 608S, 608T). In contrast, the signaling LEDs 620R, 620S, 620T are on.

When one of the varistors 608R, 608S, 608T degrades, the current in the corresponding emitter diode 616R, 616S, 616T tends to be reduced and is not capable of maintaining the respective phototransistor 617R, 617S, 617T in the on-state. The capacitor 618 is thus charged to the reverse breakdown voltage of the zener diode 619 during the positive half-wave of the corresponding phase 602R, 602S, 602T, and causes the signaling LED 621 to switch on. The switching on of the signaling LED 621 and the simultaneous switching off of one of the signaling LEDs 620R, 620S, 620T allow to signal a malfunction, but also to identify which of the varistors 608R, 608S, 608T needs to be replaced.

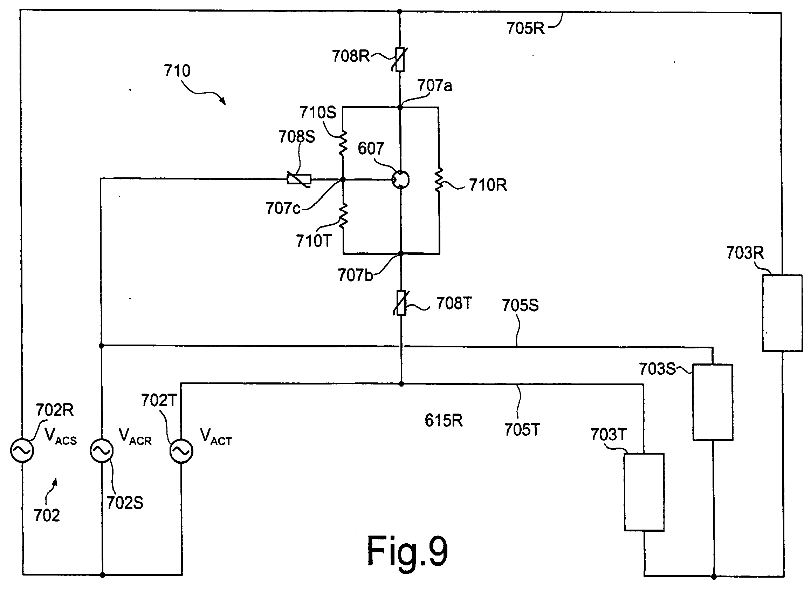

In the embodiment shown in figure 9, a protection device 700 is connected between a power source 702, providing a three-phase star-connected power voltage $V_{ACS}$, $V_{ACR}$, $V_{ACT}$, and an electric equipment 703, and comprises: a first phase line 705R, and second phase line 705S and a third phase line 705T; a gas discharge device 707 having a first terminal 707a, a second terminal 707b and a third terminal 707c; a first varistor 708R, a second varistor 708S and a third varistor 708T; and an activation network 710.

Each of the varistors 708R, 708S, 708T is connected between a respective terminal of the gas discharge device 707 and a respective phase line 705R, 705S, 705T.

The activation network 710 comprises a first activation resistor 710R, connected between the first terminal 707a and second terminal 707b of the gas discharge device 707; a second activation resistor 710S, connected between the first terminal 707a and the third terminal 707c of the first gas discharge device 707; and a third activation resistor 710T, connected between the second terminal 707b and the third terminal 707c of the first gas discharge device 707.

It is finally apparent that changes and variations may be made to the protection device according to the present invention, without departing from the scope of the appended claims.

In particular, in the embodiments in figures 1, 6 and 9, the diagnostic device which may be apparently included has not been described for simplicity.

## Claims

1.    An electric equipment protection device comprising:

a first conducting line (5; 105; 205; 305; 405; 505; 605R; 705R) and a second conducting line (6; 106; 206; 306; 406; 606; 705S), both connectable to a power source (2; 502; 602; 702) for receiving a supply voltage ($V_{DC}$; $V_{AC}$; $V_{ACS}$, $V_{ACR}$, $V_{ACT}$) having a rated value ($V_{NOM}$) ;
at least a first varistor (8; 108; 208a; 308a; 408; 508a; 608R; 708R), connected between the first conducting line and the second conducting line, and having a breakdown voltage; and
a control stage (10; 110, 112; 210, 212; 310, 312; 410; 510, 512; 610, 612; 710) cooperating with the first varistor and comprising a diagnostic device (112; 212; 312; 512; 612);
**characterized in that** the diagnostic device (112; 212; 312; 512; 612) includes:
a signaling circuit (120, 121; 220, 221; 320, 321, 322; 520, 521; 620R, 620S, 620T, 621) configured to alternatively signal a correct operating state or a malfunctioning state of the protection device;
an impedance detection circuit (116, 117; 216, 217; 316, 317; 516, 517; 616R, 617R, 616S, 617S, 616T, 617T), configured to detect an impedance of the first varistor; and
a driving network (118, 119, 125, 126; 218, 219, 225, 226; 312; 518, 519, 525, 526; 618, 619, 625R, 626R, 625S, 626S, 625T, 626T), coupled to the detection circuit and configured to drive the signaling circuit as a function of the impedance of the first varistor.

2.    A device according to claim 1, wherein the signaling circuit (120, 121; 220, 221; 320, 321, 322; 520, 521; 620R, 620S, 620T, 621) has a first state and a second state and the driving network (118, 119, 125, 126; 218, 219, 225, 226; 312; 518, 519, 525, 526; 618, 619, 625R, 626R, 625S, 626S, 625T, 626T) is configured to set the signaling circuit to the first state, when the impedance of the first varistor is lower than a threshold, and to the second state when the impendence of the first varistor is higher than the threshold.

3. A device according to claim 2, wherein the detection circuit comprises:

a photoemitter device (116; 216; 316; 516; 616R, 616S, 616T), series-connected to the first varistor, so as to emit a radiation of an intensity related to the current flowing through the first varistor; and a photodetector (117; 217; 317; 517; 617R, 617S, 617T) optically coupled to the photoemitter (116; 216; 316; 516; 616R, 616S, 616T) and electrically coupled to the signaling circuit (120, 121; 220, 221; 320, 321, 322; 520, 521; 620R, 620S, 620T, 621), so as to drive the signaling circuit according to the current flowing through the first varistor.

4. A device according to any one of the preceding claims, comprising a plurality of conducting lines and a plurality of varistors, connected between respective pairs of conducting lines;
wherein the detection circuit comprises a plurality of photoemitter devices (616R, 616S, 616T) series-connected to respective varistors, so as to emit a radiation of intensity correlated to the currents flowing through the respective varistors; and
a plurality of photodetectors (617R, 617S, 617T), optically coupled to respective photoemitter devices (616R, 616S, 616T), and electrically coupled to the signaling circuit (620R, 620S, 620T, 621), so as to drive the signaling circuit according to the currents flowing through the respective varistors.

5. A device according to any one of the preceding claims, wherein the signaling circuit (120, 121; 220, 221; 320, 321, 322; 520, 521; 620R, 620S, 620T, 621) comprises at least a first LED (120; 220; 320; 520; 620R, 620S, 620T) and a second LED (121; 221; 321; 521; 621), which are controlled by the driving network so as to be selectively set to an off-state or to an on-according to the current flowing through the first varistor.

6. A device according to any one of the preceding claims, wherein:

the control stage (10; 110, 112; 210, 212; 310, 312; 410; 510, 512; 610, 612; 710) comprises at least a first gas discharge device (7; 107; 207; 307; 407; 507; 607R; 707), having a first state with high impendence and a second state with low impendence, and a threshold voltage ($V_S$);
the first gas discharge device is connected between the first conducting line (5; 105; 205; 305; 405; 505; 605R; 705R) and the second conducting line (6; 106; 206; 306; 406; 606; 705S) via the first varistor (8; 108; 208a; 308a; 408; 508a; 608R; 708R);
the breakdown voltage of the first varistor is lower than the rated voltage, and the sum of the breakdown voltage of the first varistor and of the threshold voltage of the first gas discharge device is higher than the rated voltage; and
the control stage is configured so that the switching of the gas discharge device (7; 107; 207; 307; 407; 507; 607R; 707) from the first state to the second state causes the breakdown voltage ($V_{BD}$) of the first varistor (8; 108; 208a; 308a; 408; 508a; 608R; 708R) to be exceeded.

7. A device according to claim 6, wherein the control stage (10; 110, 112; 210, 212; 310, 312; 410; 510, 512; 610, 612; 710) comprises an activation network (10; 110; 210; 310; 410; 510; 610; 710), cooperating with the first varistor to supply an operating voltage higher than the threshold voltage to the terminals of the first gas discharge device, in response to an input overvoltage ($V_{IN}$) between the first conducting line and the second conducting line which is higher than a trigger voltage ($V_{TR}$); and wherein the activation network (10; 110; 210; 310; 410; 510; 610; 710) comprises a first activation resistor (10; 113; 213a; 313a; 417; 510; 613R; 710R) connected between two terminals of the first gas discharge device.

8. A device according to claim 7, comprising a second varistor (208b; 308b; 508b; 608S; 708S), and wherein the first varistor is connected between a first terminal of the first gas discharge device (207; 307; 507; 607R; 707) and the first conducting line, and the second varistor is connected between a second terminal of the first gas discharge device and the second conducting line (206; 306; 506; 606; 705S).

9. A device according to claim 8, comprising a third varistor (508c) connected between a third terminal of the first gas discharge device and a reference potential line.

10. A device according to claim 8, comprising a third conducting line (605T; 705T), and a third varistor (608T; 708T), connected between a third terminal of the first gas discharge device (607R; 707) and the third conducting line (605T;

705T).

11. A device according to claim 10, wherein the activation network comprises a second activation resistor (613S; 713S) connected between the first terminal and third terminal of the first gas discharge device (607; 707), and a third activation resistor (613T; 713T) connected between the second terminal and third terminal of the first gas discharge device (607; 707).

12. A device according to claim 7 or 8, comprising a reference potential line (211; 311); and wherein:

the first gas discharge device (207; 307) has a first terminal (207a; 307a) and a second terminal (207b; 307b); the activation network (210; 310) comprises a second activation resistor (213b; 313b) and a third activation resistor (213c; 313c); the first activation resistor (213a; 313a) is connected between the first terminal (207a; 307a) and second terminal (207b; 307b) of the first gas discharge device (207; 307); the second activation resistor (213b; 313b) is connected between the first terminal (207a; 307a) of the first gas discharge device (207; 307) and the reference potential line (211; 311); and the third activation resistor (213c; 313c) is connected between the second terminal (207b; 307b) of the first gas discharge device (207; 307) and the reference potential line (211; 311).

13. A device according to claim 8, comprising:

a second gas discharge device (607S) and a third gas discharge device (607T); and a second varistor (608S) and a third varistor (608T); and wherein:

the first conducting line is a first phase line (605R; 705R) and the second conducting line (606) is a neutral line, and comprising a second phase line (605S; 705S) and a third phase line (605T; 705T); and the first gas discharge device (607R), the second gas discharge device (607S), and the third gas discharge device (607T) have respective first terminals connected to the first phase line (605R) via the first varistor (608R), to the second phase line (605S) via the second varistor (608S), and to the third phase line (605T) via the third varistor (608T), respectively, and respective second terminals connected to the second conducting line (606).

14. A device according to claim 13, wherein:

the activation network comprises a second activation resistor and a third activation resistor; the first activation resistor (613R) is connected between the first terminal and second terminal of the first gas discharge device (607R); the second activation resistor (613S) is connected between the first terminal and second terminal of the second gas discharge device (607S); and the third activation resistor (613T) is connected between the first terminal and second terminal of the third gas discharge device (607T).

15. A device according to claim 13 or 14, comprising a fourth gas discharge device (609) having a first terminal connected to the first terminal of the first gas discharge device (607R), a second terminal connected to the first terminal of the second gas discharge device (607S), and a third terminal connected to the first terminal of the third gas discharge device (607T); and comprising a fourth varistor (608d) and a reference potential line (611); and wherein third terminals of the first gas discharge device (607R), of the second gas discharge device (607S), and of the third gas discharge device (607T) are connected to the reference potential line (611) via the fourth varistor (609).

**Patentansprüche**

1. Schutzvorrichtung für elektrische Geräte, umfassend:

eine erste Leiterbahn (5; 105; 205; 305; 405; 505; 605R; 705R) und eine zweite Leiterbahn (6; 106; 206; 306; 406; 606; 705S), die jeweils mit einer Stromquelle (2; 502; 602; 702) verbunden werden können, um eine Versorgungsspannung ($V_{DC}$, $V_{AC}$, $V_{ACS}$, $V_{ACR}$, $V_{ACT}$) mit einem Sollwert ($V_{NOM}$) zu erhalten;

wenigstens einen ersten Varistor (8; 108; 208a; 308a; 408; 508a; 608R; 708R), der zwischen der ersten Leiterbahn und der zweiten Leiterbahn geschaltet ist und eine Durchbruchspannung besitzt; und

eine Regelstufe (10; 110, 112; 210, 212; 310, 312; 410; 510, 512; 610, 612; 710), die mit dem ersten Varistor zusammenwirkt und eine Diagnosevorrichtung (112; 212; 312; 512; 612) umfasst;

**dadurch gekennzeichnet, dass** die Diagnosevorrichtung (112; 212; 312; 512; 612) umfasst:

eine Signalschaltung (120, 121; 220, 221; 320, 321; 322; 520, 521; 620R, 620S, 620T, 621), die konfiguriert ist, wahlweise einen fehlerfreien Betriebszustand oder einen fehlerhaften Zustand der Schutzvorrichtung zu melden;

eine Impedanzerkennungsschaltung (116, 117; 216, 217; 316, 317; 516, 517; 616R, 617R, 616S, 617S, 616T, 617T), die konfiguriert ist, eine Impedanz des ersten Varistors zu erkennen; und

ein Steuerungsnetzwerk (118, 119, 125, 126; 218, 219, 225, 226; 312; 518, 519, 525, 526; 618, 619, 625R, 626R, 625S, 626S, 625T, 626T), welches mit der Erkennungsschaltung verbunden ist und konfiguriert ist, die Signalschaltung in Abhängigkeit von der Impedanz des ersten Varistors anzusteuern.

2. Vorrichtung gemäß Anspruch 1, wobei die Signalschaltung (120, 121; 220, 221; 320, 321; 322; 520, 521; 620R, 620S, 620T, 621) einen ersten Zustand und einen zweiten Zustand aufweist und das Steuerungsnetzwerk (118, 119, 125, 126; 218, 219, 225, 226; 312; 518, 519, 525, 526; 618, 619, 625R, 626R, 625S, 626S, 625T, 626T) konfiguriert ist, die Signalschaltung in den ersten Zustand zu versetzen, wenn die Impedanz des ersten Varistors unter einem Schwellenwert liegt, und in den zweiten Zustand zu versetzen, wenn die Impedanz des ersten Varistors über einem Schwellenwert liegt.

3. Vorrichtung gemäß Anspruch 2, wobei die Erkennungsschaltung umfasst:

eine Photoemittervorrichtung (116; 216; 316; 516; 616R, 616S, 616T), die in Reihe mit dem ersten Varistor geschaltet ist, so dass sie eine Strahlung mit einer Intensität emittiert, die mit dem Strom, der durch den ersten Varistor fließt, korreliert; und

einen Photodetektor (117; 217; 317; 517; 617R, 617S, 617T), der optisch an den Photoemitter (116; 216; 316; 516; 616R, 616S, 616T) und elektrisch an die Signalschaltung (120, 121; 220, 221; 320, 321; 322; 520, 521; 620R, 620S, 620T, 621) gekoppelt ist, so dass die Signalschaltung gemäß dem Strom, der durch den ersten Varistor fließt, angesteuert wird.

4. Vorrichtung gemäß irgendeinem der vorhergehenden Ansprüche, welche eine Vielzahl an Leiterbahnen und eine Vielzahl an Varistoren, die zwischen den jeweiligen Leiterbahnpaaren geschaltet sind, umfasst;

wobei die Erkennungsschaltung eine Vielzahl an Photoemittervorrichtungen (616R, 616S, 616T), die mit den jeweiligen Varistoren in Reihe geschaltet sind, so dass sie eine Strahlung mit einer Intensität emittieren, die mit den Strömen, die durch die jeweiligen Varistoren fließen, korreliert; und

eine Vielzahl an Photodetektoren (617R, 617S, 617T), die optisch mit den jeweiligen Photoemittervorrichtungen (616R, 616S, 616T) gekoppelt sind und elektrisch mit der Signalschaltung (620R, 620S, 620T, 621) gekoppelt sind, so dass die Signalschaltung gemäß den Strömen, die durch die jeweiligen Varistoren fließen, angesteuert wird, umfasst.

5. Vorrichtung gemäß irgendeinem der vorhergehenden Ansprüche, wobei die Signalschaltung (120, 121; 220, 221; 320, 321; 322; 520, 521; 620R, 620S, 620T, 621) wenigstens eine erste LED (120; 220; 320; 520; 620R, 620S, 620T) und eine zweite LED (121; 221; 321; 521; 621) umfasst, welche durch das Steuerungsnetzwerk angesteuert werden, so dass sie, gemäß dem Strom, welcher durch den ersten Varistor fließt, selektiv in einen Aus-Zustand oder in einen Ein-Zustand versetzt werden.

6. Vorrichtung gemäß irgendeinem der vorhergehenden Ansprüche, wobei:

die Regelstufe (10; 110, 112; 210, 212; 310, 312; 410; 510, 512; 610, 612; 710) wenigstens eine erste Gasentladungsvorrichtung (7; 107; 207; 307; 407; 507; 607R; 707) umfasst, welche einen ersten Zustand mit hoher Impedanz und einen zweiten Zustand mit niedriger Impedanz und eine Schwellenspannung ($V_s$) aufweist, wobei die erste Gasentladungsvorrichtung zwischen der ersten Leiterbahn (5; 105; 205; 305; 405; 505; 605R; 705R) und der zweiten Leiterbahn (6; 106; 206; 306; 406; 606; 705S) über den ersten Varistor (8; 108; 208a; 308a; 408; 508a; 608R; 708R) geschaltet ist;

wobei die Durchbruchspannung des ersten Varistors geringer ist als die Nennspannung, und die Summe der Durchbruchspannung des ersten Varistors und der Schwellenspannung der ersten Gasentladungsvorrichtung höher ist als die Nennspannung; und

die Regelstufe derart konfiguriert ist, dass das Umschalten der Gasentladungsvorrichtung (7; 107; 207; 307; 407; 507; 607R; 707) von dem ersten Zustand in den zweiten Zustand ein Überschreiten der Durchbruchspannung ($V_{BD}$) des ersten Varistors (8; 108; 208a; 308a; 408; 508a; 608R; 708R) bewirkt.

7. Vorrichtung gemäß Anspruch 6, wobei die Regelstufe (10; 110, 112; 210, 212; 310, 312; 410; 510, 512; 610, 612; 710) ein Aktivierungsnetzwerk (10; 110; 210; 310; 410; 510; 610; 710) umfasst, welches mit dem ersten Varistor zusammenwirkt, um an die Anschlüsse der ersten Gasentladungsvorrichtung eine Betriebsspannung zu liefern, die höher ist als die Schwellenspannung, als Antwort auf eine Eingangsüberspannung ($V_{IN}$) zwischen der ersten Leiterbahn und der zweiten Leiterbahn, welche höher ist als eine Auslösespannung ($V_{TR}$); und wobei das Aktivierungsnetzwerk (10; 110; 210; 310; 410; 510; 610; 710) einen ersten Aktivierungswiderstand (10; 113; 213a; 313a; 417; 510; 613R; 710R) umfasst, der zwischen zwei Anschlüssen der ersten Gasentladungsvorrichtung geschaltet ist.

8. Vorrichtung gemäß Anspruch 7, welche einen zweiten Varistor (208b; 308b; 508b; 608S; 708S) umfasst, wobei der erste Varistor zwischen einem ersten Anschluss der ersten Gasentladungsvorrichtung (207; 307; 507; 607R; 707) und der ersten Leiterbahn geschaltet ist, und der zweite Varistor zwischen einem zweiten Anschluss der ersten Gasentladungsvorrichtung und der zweiten Leiterbahn (206; 306; 506; 606; 705S) geschaltet ist.

9. Vorrichtung gemäß Anspruch 8, welche einen dritten Varistor (508c) umfasst, der zwischen einem dritten Anschluss der ersten Gasentladungsvorrichtung und einer Referenzpotentialleitung geschaltet ist.

10. Vorrichtung gemäß Anspruch 8, welche eine dritte Leiterbahn (605T; 705T) und einen dritten Varistor (608T; 708T), der zwischen einem dritten Anschluss der ersten Gasentladungsvorrichtung (607R; 707) und der dritten Leiterbahn (605T; 705T) geschaltet ist, umfasst.

11. Vorrichtung gemäß Anspruch 10, wobei das Aktivierungsnetzwerk einen zweiten Aktivierungswiderstand (613S; 713S), der zwischen dem ersten Anschluss und dem dritten Anschluss der ersten Gasentladungsvorrichtung (607; 707) geschaltet ist, und einen dritten Aktivierungswiderstand, (613T; 713T), der zwischen dem zweiten Anschluss und dem dritten Anschluss der ersten Gasentladungsvorrichtung (607; 707) geschaltet ist, umfasst.

12. Vorrichtung gemäß Anspruch 7 oder 8, welche eine Referenzpotentialleitung (211; 311) umfasst, wobei:

die erste Gasentladungsvorrichtung (207; 307) einen ersten Anschluss (207a; 307a) und einen zweiten Anschluss (207b; 307b) aufweist;

das Aktivierungsnetzwerk (210; 310) einen zweiten Aktivierungswiderstand (213b; 313b) und einen dritten Aktivierungswiderstand (213c; 313c) umfasst;

der erste Aktivierungswiderstand (213a; 313a) zwischen dem ersten Anschluss (207a; 307a) und dem zweiten Anschluss (207b; 307b) der ersten Gasentladungsvorrichtung (207; 307) geschaltet ist;

der zweite Aktivierungswiderstand (213b; 313b) zwischen dem ersten Anschluss (207a; 307a) der ersten Gasentladungsvorrichtung (207; 307) und der Referenzpotentialleitung (211; 311) geschaltet ist; und

der dritte Aktivierungswiderstand (213c; 313c) zwischen dem zweiten Anschluss (207b; 307b) der ersten Gasentladungsvorrichtung (207; 307) und der Referenzpotentialleitung (211; 311) geschaltet ist.

13. Vorrichtung gemäß Anspruch 8, umfassend:

eine zweite Gasentladungsvorrichtung (607S) und eine dritte Gasentladungsvorrichtung (607T); und
einen zweiten Varistor (608S) und einen dritten Varistor (608T);
wobei:

die erste Leiterbahn ein erster Phasenleiter (605R; 705R) ist, und die zweite Leiterbahn (606) ein Neutralleiter ist und einen zweiten Phasenleiter (605S; 705S) und einen dritten Phasenleiter (605T; 705T) umfasst; und

die erste Gasentladungsvorrichtung (607R), die zweite Gasentladungsvorrichtung (607S) und die dritte Gasentladungsvorrichtung (607T) jeweils erste Anschlüsse aufweisen, die mit dem ersten Phasenleiter (605R) über den ersten Varistor (608R), an den zweiten Phasenleiter (605S) über den zweiten Varistor (608S) beziehungsweise an den dritten Phasenleiter (605T) über den dritten Varistor (608T) verbunden sind, und jeweils zweite Anschlüsse aufweisen, die mit der zweiten Leiterbahn (606) verbunden sind.

**14.** Vorrichtung gemäß Anspruch 13, wobei:

das Aktivierungsnetzwerk einen zweiten Aktivierungswiderstand und einen dritten Aktivierungswiderstand umfasst;

der erste Aktivierungswiderstand (613R) zwischen dem ersten Anschluss und dem zweiten Anschluss der ersten Gasentladungsvorrichtung (607R) geschaltet ist;

der zweite Aktivierungswiderstand (613S) zwischen dem ersten Anschluss und dem zweiten Anschluss der zweiten Gasentladungsvorrichtung (607S) geschaltet ist; und

der dritte Aktivierungswiderstand (613T) zwischen dem ersten Anschluss und dem zweiten Anschluss der dritten Gasentladungsvorrichtung (607T) geschaltet ist.

**15.** Vorrichtung gemäß Anspruch 13 oder 14, welche eine vierte Gasentladungsvorrichtung (609), welche einen ersten Anschluss, der mit dem ersten Anschluss der ersten Gasentladungsvorrichtung (607R) verbunden ist, einen zweiten Anschluss, der mit dem ersten Anschluss der zweiten Gasentladungsvorrichtung (607S) verbunden ist, und einen dritten Anschluss, der mit dem ersten Anschluss der dritten Gasentladungsvorrichtung (607T) verbunden ist, aufweist, und einen vierten Varistor (608d) und eine Referenzpotentialleitung (611) umfasst, wobei dritte Anschlüsse der ersten Gasentladungsvorrichtung (607R), der zweiten Gasentladungsvorrichtung (607S) und der dritten Gasentladungsvorrichtung (607T) mit der Referenzpotentialleitung (611) über den vierten Varistor (609) verbunden sind.

## Revendications

**1.** Dispositif de protection d'équipement électrique comprenant :

une première ligne conductrice (5 ; 105 ; 205 ; 305 ; 405 ; 505 ; 605R ; 705R) et une deuxième ligne conductrice (6 ; 106 ; 206 ; 306 ; 406 ; 606 ; 705S), toutes deux connectables à une source d'alimentation (2 ; 502 ; 602 ; 702) pour recevoir une tension d'alimentation ($V_{DC}$ ; $V_{AC}$ ; $V_{ACS}$, $V_{ACR}$, $V_{ACT}$) ayant une valeur nominale ($V_{NOM}$), au moins une première varistance (8 ; 108 ; 208a ; 308a ; 408 ; 508a ; 608R ; 708R), connectée entre la première ligne conductrice et la deuxième ligne conductrice, et ayant une tension de claquage, et

un étage de contrôle (10; 110, 112; 210, 212; 310, 312; 410; 510, 512; 610, 612 ; 710) coopérant avec la première varistance et comprenant un dispositif de diagnostic (112 ; 212 ; 312 ; 512 ; 612),

**caractérisé en ce que** le dispositif de diagnostic (112 ; 212 ; 312 ; 512 ; 612) inclut :

un circuit de signalisation (120, 121 ; 220, 221 ; 320, 321, 322 ; 520, 521 ; 620R, 620S, 620T, 621) configuré pour signaler de façon alternée un état de fonctionnement correct ou un état de dysfonctionnement du dispositif de protection,

un circuit de détection d'impédance (116, 117 ; 216, 217 ; 316, 317 ; 516, 517 ; 616R, 617R, 616S, 617S, 616T, 617T), configuré pour détecter une impédance de la première varistance, et

un réseau de commande (118, 119, 125, 126 ; 218, 219, 225, 226 ; 312 ; 518, 519, 525, 526 ; 618, 619, 625R, 626R, 625S, 626S, 625T, 626T), couplé au circuit de détection et configuré pour commander le circuit de signalisation en fonction de l'impédance de la première varistance.

**2.** Dispositif selon la revendication 1, dans lequel le circuit de signalisation (120, 121 ; 220, 221 ; 320, 321, 322 ; 520, 521 ; 620R, 620S, 620T, 621) a un premier état et un deuxième état et le réseau de commande (118, 119, 125, 126 ; 218, 219, 225, 226 ; 312 ; 518, 519, 525, 526 ; 618, 619, 625R, 626R, 625S, 626S, 625T, 626T) est configuré pour placer le circuit de signalisation dans le premier état, lorsque l'impédance de la première varistance est inférieure à un seuil, et dans le deuxième état lorsque l'impédance de la première varistance est supérieure au seuil.

**3.** Dispositif selon la revendication 2, dans lequel le circuit de détection comprend :

un dispositif photo-émetteur (116 ; 216 ; 316 ; 516 ; 616R, 616S, 616T), connecté en série à la première varistance, de manière à émettre un rayonnement d'une intensité liée au courant circulant à travers la première varistance, et

un photo-détecteur (117 ; 217 ; 317 ; 517 ; 617R, 617S, 617T) couplé optiquement au photo-émetteur (116 ; 216 ; 316 ; 516 ; 616R, 616S, 616T) et couplé électriquement au circuit de signalisation (120, 121 ; 220, 221 ; 320, 321, 322 ; 520, 521 ; 620R, 620S, 620T, 621), de manière à commander le circuit de signalisation en fonction du courant circulant à travers la première varistance.

**4.** Dispositif selon l'une quelconque des revendications précédentes, comprenant une pluralité de lignes conductrices et une pluralité de varistances, connectées entre des paires respectives de lignes conductrices,

dans lequel le circuit de détection comprend une pluralité de dispositifs photo-émetteurs (616R, 616S, 616T) connectés en série à des varistances respectives, de manière à émettre un rayonnement d'une intensité liée aux courants circulant à travers les varistances respectives, et

une pluralité de photo-détecteurs (617R, 617S, 617T), couplés optiquement aux dispositifs photo-émetteurs (616R, 616S, 616T) respectifs, et couplés électriquement au circuit de signalisation (620R, 620S, 620T, 621), de manière à commander le circuit de signalisation en fonction des courants circulant à travers les varistances respectives.

**5.** Dispositif selon l'une quelconque des revendications précédentes, dans lequel le circuit de signalisation (120, 121 ; 220, 221 ; 320, 321, 322 ; 520, 521 ; 620R, 620S, 620T, 621) comprend au moins une première diode DEL (120 ; 220 ; 320 ; 520 ; 620R, 620S, 620T) et une deuxième diode DEL (121 ; 221 ; 321 ; 521 ; 621), qui sont contrôlées par le réseau de commande de manière à être placées sélectivement dans un état inactif ou dans un état actif en fonction du courant circulant à travers la première varistance.

**6.** Dispositif selon l'une quelconque des revendications précédentes, dans lequel :

l'étage de contrôle (10 ; 110, 112 ; 210, 212 ; 310, 312 ; 410 ; 510, 512 ; 610, 612 ; 710) comprend au moins un premier dispositif à décharge gazeuse (7 ; 107 ; 207 ; 307 ; 407 ; 507 ; 607R ; 707), ayant un premier état avec une impédance haute et un deuxième état avec une impédance basse, et une tension de seuil (Vs),

le premier dispositif à décharge gazeuse est connecté entre la première ligne conductrice (5 ; 105 ; 205 ; 305 ; 405 ; 505 ; 605R ; 705R) et la deuxième ligne conductrice (6 ; 106 ; 206 ; 306 ; 406 ; 606 ; 705S) par le biais de la première varistance (8 ; 108 ; 208a ; 308a ; 408 ; 508a ; 608R ; 708R),

la tension de claquage de la première varistance est inférieure à la tension nominale, et la somme de la tension de claquage de la première varistance et de la tension de seuil du premier dispositif à décharge gazeuse est inférieure à la tension nominale, et

l'étage de contrôle est configuré de sorte que le basculement du premier dispositif à décharge gazeuse (7 ; 107 ; 207 ; 307 ; 407 ; 507 ; 607R ; 707) du premier état au deuxième état amène la tension de claquage ($V_{BD}$) de la première varistance (8 ; 108 ; 208a ; 308a ; 408 ; 508a ; 608R ; 708R) à être dépassée.

**7.** Dispositif selon la revendication 6, dans lequel l'étage de contrôle (10 ; 110, 112 ; 210, 212 ; 310, 312 ; 410 ; 510, 512 ; 610, 612 ; 710) comprend un réseau d'activation (10 ; 110 ; 210 ; 310 ; 410 ; 510 ; 610 ; 710), coopérant avec la première varistance pour fournir une tension de fonctionnement supérieure à la tension de seuil aux bornes du premier dispositif à décharge gazeuse, en réponse à une surtension d'entrée ($V_{IN}$) entre la première ligne conductrice et la deuxième ligne conductrice qui est supérieure à une tension de déclenchement ($V_{TR}$), et dans lequel le réseau d'activation (10 ; 110 ; 210 ; 310 ; 410 ; 510 ; 610 ; 710) comprend une première résistance d'activation (10 ; 113 ; 213a ; 313a ; 417 ; 510 ; 613R ; 710R) connectée entre deux bornes du premier dispositif à décharge gazeuse.

**8.** Dispositif selon la revendication 7, comprenant une deuxième varistance (208b ; 308b ; 508b ; 608S ; 708S), et dans lequel la première varistance est connectée entre une première borne du premier dispositif à décharge gazeuse (207 ; 307 ; 507 ; 607R ; 707) et la première ligne conductrice, et la deuxième varistance est connectée entre une deuxième borne du premier dispositif à décharge gazeuse et la deuxième ligne conductrice (206 ; 306 ; 506 ; 606 ; 705S).

**9.** Dispositif selon la revendication 8, comprenant une troisième varistance (508c) connectée entre une troisième borne du premier dispositif à décharge gazeuse et une ligne de potentiel de référence.

**10.** Dispositif selon la revendication 8, comprenant une troisième ligne conductrice (605T ; 705T), et une troisième varistance (608T ; 708T), connectée entre une troisième borne du premier dispositif à décharge gazeuse (607R ; 707) et la troisième ligne conductrice (605T ; 705T).

**11.** Dispositif selon la revendication 10, dans lequel le réseau d'activation comprend une deuxième résistance d'activation (613S ; 713S) connectée entre la première borne et la troisième borne du premier dispositif à décharge gazeuse (607 ; 707), et une troisième résistance d'activation (613T ; 713T) connectée entre la deuxième borne et la troisième borne du premier dispositif à décharge gazeuse (607 ; 707).

**12.** Dispositif selon la revendication 7 ou 8, comprenant une ligne de potentiel de référence (211 ; 311), et dans lequel :

le premier dispositif à décharge gazeuse (207 ; 307) a une première borne (207a ; 307a) et une deuxième borne (207b ; 307b),

le réseau d'activation (210 ; 310) comprend une deuxième résistance d'activation (213b ; 313b) et une troisième résistance d'activation (213c ; 313c),

la première résistance d'activation (213a ; 313a) est connectée entre la première borne (207a ; 307a) et la deuxième borne (207b ; 307b) du premier dispositif à décharge gazeuse (207 ; 307),

la deuxième résistance d'activation (213b ; 313b) est connectée entre la première borne (207a ; 307a) du premier dispositif à décharge gazeuse (207 ; 307) et la ligne de potentiel de référence (211 ; 311), et

la troisième résistance d'activation (213c ; 313c) est connectée entre la deuxième borne (207b ; 307b) du premier dispositif à décharge gazeuse (207 ; 307) et la ligne de potentiel de référence (211 ; 311).

**13.** Dispositif selon la revendication 8, comprenant :

un deuxième dispositif à décharge gazeuse (607S) et un troisième dispositif à décharge gazeuse (607T), et une deuxième varistance (608S) et une troisième varistance (608T),

et dans lequel :

la première ligne conductrice est une première ligne de phase (605R ; 705R) et la deuxième ligne conductrice (606) est une ligne neutre, et comprenant une deuxième ligne de phase (605S ; 705S) et une troisième ligne de phase (605T ; 705T), et

le premier dispositif à décharge gazeuse (607R), le deuxième dispositif à décharge gazeuse (607S), et le troisième dispositif à décharge gazeuse (607T) ont des premières bornes respectives connectées à la première ligne de phase (605R) par le biais de la première varistance (608R), à la deuxième ligne de phase (605S) par le biais de la deuxième varistance (608S), et à la troisième ligne de phase (605T) par le biais de la troisième varistance (608T), respectivement, et des deuxièmes bornes respectives connectées à la deuxième ligne conductrice (606).

**14.** Dispositif selon la revendication 13, dans lequel :

le réseau d'activation comprend une deuxième résistance d'activation et une troisième résistance d'activation, la première résistance d'activation (613R) est connectée entre la première borne et la deuxième borne du premier dispositif à décharge gazeuse (607R),

la deuxième résistance d'activation (613S) est connectée entre la première borne et la deuxième borne du deuxième dispositif à décharge gazeuse (607S), et

la troisième résistance d'activation (613T) est connectée entre la première borne et la deuxième borne du troisième dispositif à décharge gazeuse (607T).

**15.** Dispositif selon la revendication 13 ou 14, comprenant un quatrième dispositif à décharge gazeuse (609) ayant une première borne connectée à la première borne du premier dispositif à décharge gazeuse (607R), une deuxième borne connectée à la première borne du deuxième dispositif à décharge gazeuse (607S), et une troisième borne connectée à la première borne du troisième dispositif à décharge gazeuse (607T), et comprenant une quatrième varistance (608d) et une ligne de potentiel de référence (611), et dans lequel les troisièmes bornes du premier dispositif à décharge gazeuse (607R), du deuxième dispositif à décharge gazeuse (607S), et du troisième dispositif à décharge gazeuse (607T) sont connectées à ligne de potentiel de référence (611) par le biais de la quatrième varistance (609).

# Fig.1

# Fig.2

Fig.3

Fig.4

Fig.5

Fig.6

Fig.7

Fig.8

Fig.9

## REFERENCES CITED IN THE DESCRIPTION

**Patent documents cited in the description**

- DE 34234445 A1
- US 2005162801 A1
- US 2006262478 A1